# EUROPEAN PATENT APPLICATION

(11) **EP 4 686 070 A1**
(43) Date of publication of application: **28.01.2026**
(21) Application number: 23931814.0
(22) Date of filing: 01.12.2023
(51) Int. Cl.: H02M 3/335, H02M 1/32

(54) **CONTROL CIRCUIT AND CONTROL METHOD FOR POWER SUPPLY MODULE, POWER SUPPLY MODULE, AND ELECTRONIC DEVICE**

(30) Priority: 06.04.2023 CN 202310396621
(71) Applicant: Huawei Digital Power Technologies Co., Ltd., Shenzhen, Guangdong 518043 (CN)
(72) Inventor: LUO, Yu, Shenzhen, Guangdong 518043 (CN); LUO, Yiwen, Shenzhen, Guangdong 518043 (CN); CHIN, Ken, Shenzhen, Guangdong 518043 (CN); DAI, Baolei, Shenzhen, Guangdong 518043 (CN)
(74) Representative: Gill Jennings & Every LLP
(86) International application number: PCT/CN2023/135982
(87) International publication number: WO 2024/207768

(57) **Abstract**

This application provides a control circuit and a control method for a power supply module, a power supply module, and an electronic device. The power supply module includes a voltage conversion circuit, a secondary-side feedback circuit, and an isolation circuit. The voltage conversion circuit is configured to convert a direct current input voltage into a direct current output voltage. The secondary-side feedback circuit is configured to obtain the direct current output voltage and output a sampling voltage based on the direct current output voltage. The isolation circuit is configured to output a feedback signal in response to the sampling voltage. The control circuit is configured to: in response to not receiving the feedback signal, output an open-loop control signal to the voltage conversion circuit; and in response to open-loop pule generation information meeting a preset condition, stop outputting the open-loop control signal. The open-loop pule generation information includes open-loop pule generation duration or an open-loop pule generation duty cycle, the open-loop pule generation duration is a time period for the control circuit to output the open-loop control signal, and the open-loop pule generation duty cycle is a duty cycle of the open-loop control signal.

## Description

This application claims priority to Chinese Patent Application No. 202310396621.5, filed with the China National Intellectual Property Administration on April 6, 2023 and entitled "CONTROL CIRCUIT AND CONTROL METHOD FOR POWER SUPPLY MODULE, POWER SUPPLY MODULE, AND ELECTRONIC DEVICE", which is incorporated herein by reference in its entirety.

### TECHNICAL FIELD

This application relates to the field of power electronics technologies, and in particular, to a control circuit and a control method for a power supply module, a power supply module, and an electronic device.

### BACKGROUND

To make a direct current output voltage of a power supply module stable, closed-loop control usually needs to be performed on the output voltage. In an isolated power supply module, an output voltage needs to be transferred from a secondary side to a control circuit on a primary side by crossing an isolation barrier, to avoid interference between signals on the secondary side and the primary side. However, if the isolation barrier fails, the control circuit cannot obtain information about the output voltage, that is, a feedback loop of the power supply module is faulty, and consequently the power supply module is in an open-loop control state for a long time. In this case, after the power supply module is in the open-loop control state for a long time, overvoltage occurs in the output voltage of the power supply module. In an existing solution, an additional component needs to be added, or a strict requirement is imposed on a topology structure of the power supply module. Therefore, how to establish a wider-applicable protection mechanism for a feedback fault of an isolated power supply module becomes a technical problem to be urgently resolved currently.

### SUMMARY

In view of the foregoing problem, this application provides a control circuit and a control method for a power supply module, a power supply module, and an electronic device, which can effectively prevent output overvoltage of the power supply module, and are applicable to a plurality of circuit topology structures without adding an additional component.

According to a first aspect, this application provides a control circuit for a power supply module. The power supply module includes a voltage conversion circuit, a secondary-side feedback circuit, and an isolation circuit. The voltage conversion circuit is configured to convert a direct current input voltage into a direct current output voltage. The secondary-side feedback circuit is configured to obtain the direct current output voltage and output a sampling voltage based on the direct current output voltage. The isolation circuit is configured to output a feedback signal in response to the sampling voltage. The control circuit is configured to: in response to not receiving the feedback signal, output an open-loop control signal to the voltage conversion circuit; and in response to open-loop pule generation information meeting a preset condition, stop outputting the open-loop control signal. The open-loop pule generation information includes open-loop pule generation duration or an open-loop pule generation duty cycle, the open-loop pule generation duration is a time period for the control circuit to output the open-loop control signal, and the open-loop pule generation duty cycle is a duty cycle of the open-loop control signal.

It may be understood that, in this application, whether an open-loop pule generation time period is excessively long is determined based on the open-loop pule generation information. When it is determined, based on the open-loop pule generation information, that the open-loop pule generation time period is excessively long, it indicates that the feedback loop is faulty, and then output of the open-loop control signal is stopped. In this way, output overvoltage of the power supply module can be effectively prevented.

With reference to the first aspect, in a possible implementation, that the open-loop pule generation information meets the preset condition includes: The open-loop pule generation duration exceeds preset feedback duration. In this implementation, the open-loop pule generation duration is compared with the preset feedback duration, and when the open-loop pule generation duration exceeds the preset feedback duration, output of the open-loop control signal is stopped, so that an output voltage of the voltage conversion circuit is reduced, to avoid output overvoltage of the power supply module.

With reference to the first aspect, in a possible implementation, the power supply module includes an auxiliary power supply circuit. The auxiliary power supply circuit is configured to output an auxiliary voltage to the secondary-side feedback circuit. The secondary-side feedback circuit is configured to obtain the direct current output voltage after receiving the auxiliary voltage. The preset feedback duration is a sum of first duration, a maximum value of second duration, and third duration. The first duration is interval duration between a first moment and a second moment, the first moment is a time point at which the power supply module is started, and the second moment is a time point at which the secondary-side feedback circuit receives the auxiliary voltage. The second duration is interval duration between the second moment and a third moment, and the third moment is a time point at which the secondary-side feedback circuit starts to normally work. The third duration is interval duration between the third moment and a fourth moment, and the fourth moment is a time point at which the control circuit receives the feedback signal. It may be understood that, the preset feedback duration is a maximum time interval from a time point at which the power supply module is started to a time point at which the control circuit receives the feedback signal in a normal case. If the open-loop pule generation duration is greater than the preset feedback duration, it indicates that a fault may occur in the feedback loop of the power supply module. The output voltage of the power supply module needs to be reduced in a timely manner to avoid output overvoltage.

With reference to the first aspect, in a possible implementation, the control circuit includes an open-loop control module, a switching unit, and a pule generation module. The open-loop control module is configured to output a first control signal, and output a first gating signal in response to not receiving the feedback signal. The switching unit is configured to receive the first control signal, and output the first control signal in response to the first gating signal. The pule generation module is configured to output the open-loop control signal in response to the first control signal that is output by the switching unit. It may be understood that, in this implementation, the switching unit is disposed to receive the first control signal of the open-loop control module, and output the first control signal when the feedback signal is not received, so that the pule generation module outputs the open-loop control signal. In this way, the control circuit can continuously output the open-loop control signal when information about the output voltage is not received, to maintain operation of the power supply module.

With reference to the first aspect, in a possible implementation, the isolation circuit is configured to output a feedback voltage based on the sampling voltage, where the feedback voltage represents the direct current output voltage. The open-loop control module is configured to output a second gating signal in response to receiving the feedback signal, and output the second gating signal in response to the open-loop pule generation information meeting the preset condition. The control circuit further includes a closed-loop control module, and the closed-loop control module is configured to receive the feedback voltage and output a second control signal to the switching unit. The switching unit is configured to receive the second control signal, and output the second control signal in response to the second gating signal. The pule generation module is configured to output a closed-loop control signal in response to the second control signal that is output by the switching unit. It may be understood that, in this implementation, the switching unit is disposed to receive both the first control signal of the open-loop control module and the second control signal of the closed-loop control module; and output the first control signal when the feedback signal is not received, so that the pule generation module outputs the open-loop control signal; or output the second control signal when the feedback signal is received, so that the pule generation module outputs the closed-loop control signal. In this way, the control circuit can continuously output the open-loop control signal when information about the output voltage is not received, or output the closed-loop control signal when information about the output voltage is received, to perform closed-loop control on the power supply module, thereby avoiding output overvoltage of the power supply module.

With reference to the first aspect, in a possible implementation, the closed-loop control module includes an error unit and a proportional-integral-derivative control unit. The error unit is configured to receive the feedback voltage and a reference voltage, and obtain an error signal based on the feedback voltage and the reference voltage. The proportional-integral-derivative control unit is configured to receive the error signal, and generate the second control signal based on the error signal. In this implementation, the error unit and the proportional-integral-derivative control unit are disposed to generate the second control signal including closed-loop pule generation duty cycle information, so that the control circuit can output the closed-loop control signal based on information about the output voltage, to implement closed-loop control of the power supply module.

With reference to the first aspect, in a possible implementation, that the open-loop pule generation information meets the preset condition includes: The open-loop pule generation duty cycle exceeds a preset duty cycle. In this implementation, the open-loop pule generation duty cycle is compared with the preset duty cycle, and when the open-loop pule generation duty cycle exceeds the preset duty cycle, output of the open-loop control signal is stopped, so that the output voltage of the voltage conversion circuit is reduced, to avoid output overvoltage of the power supply module.

According to a second aspect, this application provides a control method for a power supply module. The power supply module includes a voltage conversion circuit, a secondary-side feedback circuit, and an isolation circuit. The voltage conversion circuit is configured to convert a direct current input voltage into a direct current output voltage. The secondary-side feedback circuit is configured to obtain the direct current output voltage and output a sampling voltage based on the direct current output voltage. The isolation circuit is configured to output a feedback signal in response to the sampling voltage. The control method includes: in response to not receiving the feedback signal, outputting an open-loop control signal to the voltage conversion circuit; and in response to open-loop pule generation information meeting a preset condition, stopping outputting the open-loop control signal. The open-loop pule generation information includes open-loop pule generation duration or an open-loop pule generation duty cycle, the open-loop pule generation duration is a time period for a control circuit to output the open-loop control signal, and the open-loop pule generation duty cycle is a duty cycle of the open-loop control signal.

With reference to the second aspect, in a possible implementation, that the open-loop pule generation information meets the preset condition includes: The open-loop pule generation duration exceeds preset feedback duration.

With reference to the second aspect, in a possible implementation, the power supply module includes an auxiliary power supply circuit, and the auxiliary power supply circuit is configured to output an auxiliary voltage to the secondary-side feedback circuit. The secondary-side feedback circuit is configured to obtain the direct current output voltage after receiving the auxiliary voltage. The preset feedback duration is a sum of first duration, a maximum value of second duration, and third duration. The first duration is interval duration between a first moment and a second moment, the first moment is a time point at which the power supply module is started, and the second moment is a time point at which the secondary-side feedback circuit receives the auxiliary voltage. The second duration is interval duration between the second moment and a third moment, and the third moment is a time point at which the secondary-side feedback circuit starts to normally work. The third duration is interval duration between the third moment and a fourth moment, and the fourth moment is a time point at which the control circuit receives the feedback signal.

With reference to the second aspect, in a possible implementation, that the open-loop pule generation information meets the preset condition includes: The open-loop pule generation duty cycle exceeds a preset duty cycle.

According to a third aspect, this application provides a power supply module. The power supply module includes a voltage conversion circuit, a secondary-side feedback circuit, an isolation circuit, and a control circuit. The voltage conversion circuit is configured to convert a direct current input voltage into a direct current output voltage. The secondary-side feedback circuit is configured to obtain the direct current output voltage and output a sampling voltage based on the direct current output voltage. The isolation circuit is configured to output a feedback signal in response to the sampling voltage. The control circuit is configured to: in response to not receiving the feedback signal, output an open-loop control signal to the voltage conversion circuit; and in response to open-loop pule generation information meeting a preset condition, stop outputting the open-loop control signal. The open-loop pule generation information includes open-loop pule generation duration or an open-loop pule generation duty cycle, the open-loop pule generation duration is a time period for a control circuit to output the open-loop control signal, and the open-loop pule generation duty cycle is a duty cycle of the open-loop control signal.

With reference to the third aspect, in a possible implementation, that the open-loop pule generation information meets the preset condition includes: The open-loop pule generation duration exceeds preset feedback duration. Alternatively, that the open-loop pule generation information meets the preset condition includes: The open-loop pule generation duty cycle exceeds a preset duty cycle.

With reference to the third aspect, in a possible implementation, the power supply module includes an auxiliary power supply circuit, and the auxiliary power supply circuit is configured to output an auxiliary voltage to the secondary-side feedback circuit. The secondary-side feedback circuit is configured to obtain the direct current output voltage after receiving the auxiliary voltage. The preset feedback duration is a sum of first duration, a maximum value of second duration, and third duration. The first duration is interval duration between a first moment and a second moment, the first moment is a time point at which the power supply module is started, and the second moment is a time point at which the secondary-side feedback circuit receives the auxiliary voltage. The second duration is interval duration between the second moment and a third moment, and the third moment is a time point at which the secondary-side feedback circuit starts to normally work. The third duration is interval duration between the third moment and a fourth moment, and the fourth moment is a time point at which the control circuit receives the feedback signal.

According to a fourth aspect, this application provides an electronic device. The electronic device includes the control circuit for a power supply module according to any one of the first aspect or the implementations of the first aspect. Alternatively, the electronic device includes the power supply module according to any one of the third aspect or the implementations of the third aspect.

In addition, for technical effects brought by any possible implementation in the second aspect to the fourth aspect, refer to technical effects brought by different implementations in the first aspect. Details are not described herein again.

### BRIEF DESCRIPTION OF DRAWINGS

FIG. 1 is a diagram of an electronic device according to this application;
FIG. 2 is another diagram of an electronic device according to this application;
FIG. 3 is a diagram of an example of an isolated power supply module;
FIG. 4 is a diagram of a power supply module according to an embodiment of this application;
FIG. 5 is another diagram of a power supply module according to an embodiment of this application;
FIG. 6 is a diagram of the control circuit in FIG. 4; and
FIG. 7 is a schematic flowchart of a control method for a power supply module according to an embodiment of this application.

### DESCRIPTION OF EMBODIMENTS

The following clearly describes the technical solutions in embodiments of this application with reference to the accompanying drawings in embodiments of this application.

It may be understood that a connection relationship described in this application is a direct or indirect connection. For example, that A is connected to B may be that A is directly connected to B, or may be that A is indirectly connected to B by using one or more other electrical components. For example, A may be directly connected to C, and C may be directly connected to B, so that A and B are connected by using C. It may be further understood that "A is connected to B" described in this application may be that A is directly connected to B, or may be that A is indirectly connected to B by using one or more other electrical components.

In descriptions of this application, unless otherwise specified, "/" means "or". For example, A/B may mean A or B. The term "and/or" in this specification is merely an association relationship of associated objects, and indicates that three relationships may exist. For example, A and/or B may indicate the following three cases: Only A exists, both A and B exist, and only B exists.

In the descriptions of this application, words such as "first" and "second" are merely used to distinguish between different objects, and do not limit quantities and execution sequences. In addition, the words such as "first" and "second" do not indicate a definite difference. In addition, the terms "include" and "have" and any variations thereof are intended to cover non-exclusive inclusion.

To enable a person skilled in the art to better understand the technical solutions provided in this application, the following first describes a possible application scenario of the technical solutions provided in this application.

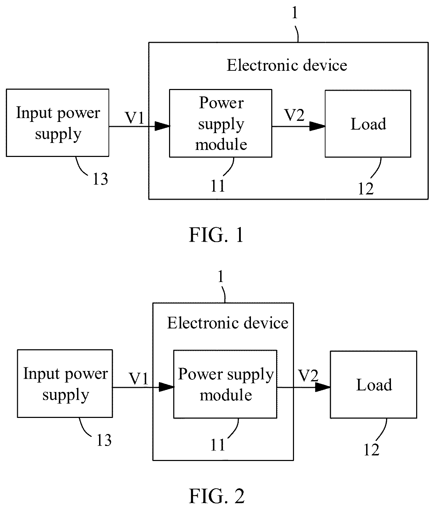

FIG. 1 is a diagram of an electronic device according to this application. As shown in FIG. 1, the electronic device 1 includes a power supply module 11 and a load 12. The power supply module 11 is configured to receive an input voltage V1 provided by an input power supply 13, and provide an output voltage V2 to supply power to the load 12. In an embodiment, the electronic device 1 may include a plurality of power supply modules 11, and the plurality of power supply modules 11 provide a plurality of output voltages V2 to supply power to the load 12. In an embodiment, the electronic device 1 may include a plurality of loads 12, and the power supply module 11 provides a plurality of output voltages V2 to respectively supply power to the plurality of loads 12. In an embodiment, the electronic device 1 may include a plurality of loads 12 and a plurality of power supply modules 11, and the plurality of power supply modules 11 may respectively supply power to the plurality of loads 12. In an embodiment, the electronic device 1 may receive output voltages V1 of a plurality of input power supplies 13. In an embodiment, the electronic device 1 may include one or more input power supplies 13. In an embodiment, the electronic device 1 may be an electronic device such as a mobile phone, a computer, a tablet, or a home appliance. In an embodiment, the load 12 includes an internal circuit of the electronic device 1 or an external electronic device of the electronic device 1.

FIG. 2 is another diagram of an electronic device according to this application. As shown in FIG. 2, the electronic device 1 includes a power supply module 11. The power supply module 11 receives an input voltage V1 provided by an input power supply 13, and provides an output voltage V2 to supply power to a load 12. In an embodiment, the electronic device 1 includes a plurality of power supply modules 11, and the plurality of power supply modules 11 may provide a plurality of output voltages V2 to supply power to the load 12. In an embodiment, the power supply module 11 in the electronic device 1 may provide a plurality of output voltages V2 to respectively supply power to a plurality of loads 12. In an embodiment, the electronic device 1 may include a plurality of power supply modules 11, and the plurality of power supply modules 11 respectively provide output voltages V2 for a plurality of loads 12. In an embodiment, the electronic device 1 may perform reception from a plurality of input power supplies 13. In an embodiment, the electronic device 1 may include an input power supply 13. In an embodiment, the electronic device 1 may be a device such as an adapter or a charging pile. Generally, the adapter (adapter) may also be referred to as a charger (charger), a charging plug, a switch power supply (switch power supply), a power converter (power converter), or the like. In an embodiment, the load 12 may be an electronic device such as a mobile phone, a computer, a tablet, or a home appliance. In an embodiment, the load 12 may be another internal circuit of the electronic device 1.

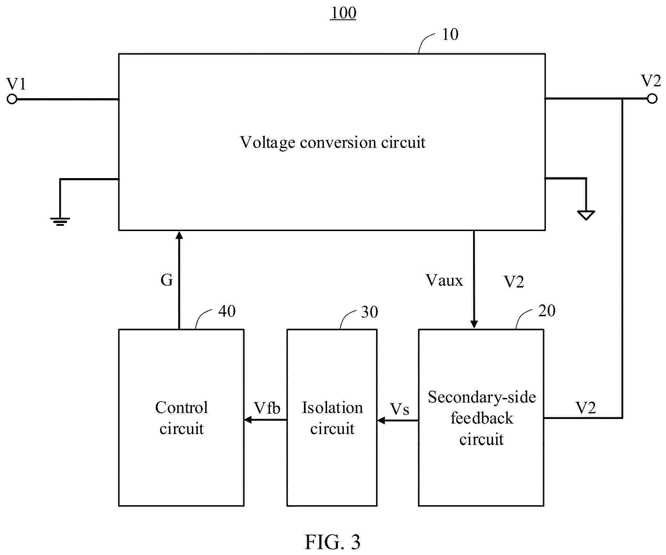

FIG. 3 is a diagram of an example of an isolated power supply module 100. The power supply module 100 includes a voltage conversion circuit 10, a secondary-side feedback circuit 20, an isolation circuit 30, and a control circuit 40.

The voltage conversion circuit 10 is configured to convert an input voltage into an output voltage, and provide an auxiliary voltage Vaux for the secondary-side feedback circuit 20.

It may be understood that, in the isolated power supply module 100, the voltage conversion circuit 10 uses an isolated topology structure. The voltage conversion circuit 10 implements power isolation by using a transformer (not shown in the figure). The transformer divides the voltage conversion circuit 10 into a primary side and a secondary side, the primary side is a side that receives an input voltage V1, and the secondary side is a side that outputs an output voltage V2. The secondary-side feedback circuit 20 may directly obtain power from a secondary-side winding on the secondary side of the voltage conversion circuit 10, or may obtain power in a form of an auxiliary winding (not shown in the figure), or may directly obtain power from an output end of the voltage conversion circuit 10. In other words, the auxiliary voltage Vaux may be provided by the secondary-side winding, the auxiliary winding, or the output end of the voltage conversion circuit 10. A manner of obtaining the auxiliary voltage Vaux is not limited in this embodiment.

In some embodiments, both the input voltage and the output voltage of the voltage conversion circuit 10 are direct current voltages.

The secondary-side feedback circuit 20 maintains normal working by receiving the auxiliary voltage Vaux. An input end of the secondary-side feedback circuit 20 is connected to the output end of the voltage conversion circuit 10 to obtain the output voltage V2. The secondary-side feedback circuit 2 is configured to convert the output voltage V2 into a sampling voltage Vs.

An input end of the isolation circuit 30 is connected to an output end of the secondary-side feedback circuit 20 to receive the sampling voltage Vs. The isolation circuit 30 is configured to convert the sampling voltage Vs into a feedback voltage Vfb.

It may be understood that a specific structure of the isolation circuit 30 is not limited herein. Generally, the isolation circuit 30 uses a linear optocoupler or a transformer as an isolation element, to implement signal transmission.

An input end of the control circuit 40 is connected to an output end of the isolation circuit 30 to receive the feedback voltage Vfb. The control circuit 40 adjusts a drive signal G based on the feedback voltage Vfb. The drive signal G is used to drive a power transistor in the voltage conversion circuit 10 to be turned on or turned off.

It may be understood that, the feedback voltage Vfb and the output voltage V2 are usually in a linear relationship. Therefore, a change of the feedback voltage Vfb can represent a change of the output voltage V2. The control circuit 40 adjusts the drive signal G based on the feedback voltage Vfb, so that a control policy of the voltage conversion circuit 10 can be adjusted, thereby better meeting a power supply requirement of a power-supplied apparatus.

It may be understood that, to make the output voltage V2 stable, the power supply module 100 generates the corresponding drive signal G by using the output voltage V2 to perform closed-loop control. The output voltage V2 or the sampling voltage Vs that represents the output voltage V2 is transferred by the secondary-side feedback circuit 20 to the primary-side control circuit 40, and needs to cross an isolation barrier. If the isolation barrier fails, for example, the isolation circuit 30 is faulty, or the secondary-side feedback circuit 20 cannot obtain the auxiliary voltage Vaux, a feedback loop of the power supply module 100 is faulty, causing an open loop of the power supply module 100. When the power supply module 100 is in an open-loop state for a long time, overvoltage occurs in the output voltage V2.

A common solution is to add an additional overvoltage protection loop in addition to an output voltage feedback loop. However, this manner requires an additional component such as an optocoupler. In this case, a size of the power supply module 100 becomes larger. Another solution is to send an auxiliary winding voltage that is proportional to the output voltage to the control circuit 40, and the control circuit 40 determines, based on the auxiliary winding voltage, whether overvoltage occurs in the output voltage of the power supply module 100, so as to perform overvoltage protection on the power supply module 100. However, this manner has a strict requirement on a topology structure of the power supply module 100, and is applicable to only a flyback or resonant topology structure. A hard switch topology structure does not have a condition that an auxiliary winding voltage is proportional to an output voltage, and therefore cannot use this manner. Therefore, how to establish a wider-applicable protection mechanism for a feedback fault of the isolated power supply module 100 becomes a technical problem to be urgently resolved currently.

To resolve the foregoing technical problem, embodiments of this application provide a control circuit and a control method for a power supply module, a power supply module, and an electronic device. According to embodiments of this application, output overvoltage of the power supply module can be effectively prevented, and no additional component needs to be added, so that embodiments of this application are applicable to a plurality of circuit topology structures. The following separately provides detailed descriptions by using specific embodiments.

An embodiment of this application provides a power supply module. The power supply module includes a voltage conversion circuit, a secondary-side feedback circuit, an isolation circuit, and a control circuit. The voltage conversion circuit is configured to convert a direct current input voltage into a direct current output voltage. The secondary-side feedback circuit is configured to obtain the direct current output voltage and output a sampling voltage based on the direct current output voltage. The isolation circuit is configured to output a feedback signal in response to the sampling voltage. The control circuit is configured to: in response to not receiving the feedback signal, output an open-loop control signal to the voltage conversion circuit; and in response to open-loop pule generation information meeting a preset condition, stop outputting the open-loop control signal. The open-loop pule generation information includes open-loop pule generation duration or an open-loop pule generation duty cycle, the open-loop pule generation duration is a time period for the control circuit to output the open-loop control signal, and the open-loop pule generation duty cycle is a duty cycle of the open-loop control signal.

An embodiment of this application further provides a control circuit for a power supply module. The power supply module includes a voltage conversion circuit, a secondary-side feedback circuit, and an isolation circuit. The voltage conversion circuit is configured to convert a direct current input voltage into a direct current output voltage. The secondary-side feedback circuit is configured to obtain the direct current output voltage and output a sampling voltage based on the direct current output voltage. The isolation circuit is configured to output a feedback signal in response to the sampling voltage. The control circuit is configured to: in response to not receiving the feedback signal, output an open-loop control signal to the voltage conversion circuit; and in response to open-loop pule generation information meeting a preset condition, stop outputting the open-loop control signal. The open-loop pule generation information includes open-loop pule generation duration or an open-loop pule generation duty cycle, the open-loop pule generation duration is a time period for the control circuit to output the open-loop control signal, and the open-loop pule generation duty cycle is a duty cycle of the open-loop control signal.

In embodiments of this application, whether an open-loop pule generation time period is excessively long is determined based on the open-loop pule generation information. When it is determined, based on the open-loop pule generation information, that the open-loop pule generation time period is excessively long, it indicates that the feedback loop is faulty, and then output of the open-loop control signal is stopped. In this way, output overvoltage of the power supply module can be effectively prevented.

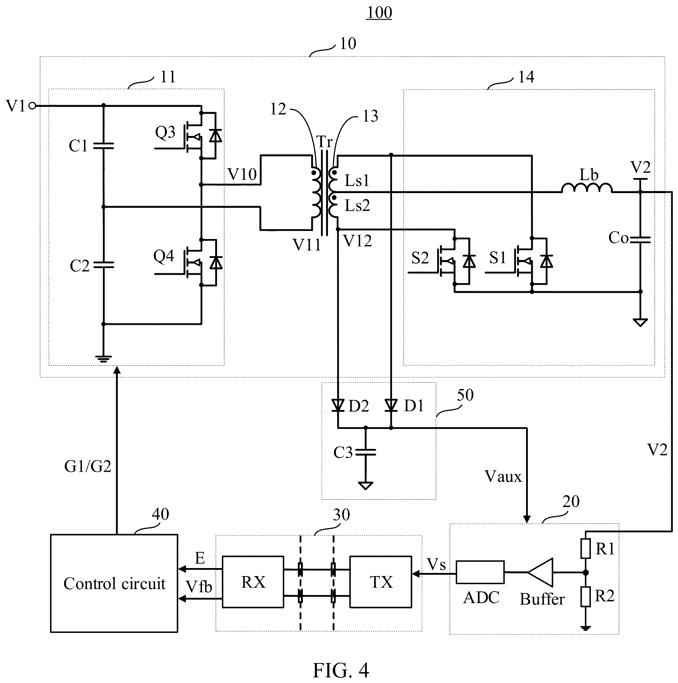

FIG. 4 is a diagram of a power supply module according to an embodiment of this application. The power supply module 100 shown in FIG. 4 may be used in the electronic device 1 shown in FIG. 1 or FIG. 2.

As shown in FIG. 4, the power supply module 100 includes a voltage conversion circuit 10, an auxiliary power supply circuit 50, a secondary-side feedback circuit 20, an isolation circuit 30, and a control circuit 40.

The voltage conversion circuit 10 is configured to convert an input voltage V1 into an output voltage V2. The voltage conversion circuit 10 includes a switch circuit 11, a transformer Tr, and a rectifier circuit 14. The transformer Tr includes a primary-side winding 12 and a secondary-side winding 13.

The switch circuit 11 is configured to receive an input voltage V1 provided by the input power supply 13, and provide an output voltage V10 based on a control signal of the control circuit 40. The input voltage V1 and the output voltage V10 each may be a voltage range. The switch circuit 11 usually includes at least one power transistor.

In this embodiment, a specific topology structure of the switch circuit 11 is not limited. For example, the switch circuit 11 may use a half-bridge topology or a full-bridge topology.

As shown in FIG. 4, the switch circuit 11 has a half-bridge topology. The switch circuit 11 includes a power transistor Q1, a power transistor Q2, an input capacitor C1, and an input capacitor C2.

For example, a drain of the power transistor Q1 is connected to one end of the input capacitor C1 and receives the input voltage V1. Another end of the input capacitor C1 is connected to one end of the input capacitor C2. A source of the power transistor Q1 is connected to a drain of the power transistor Q2. A source of the power transistor Q2 is connected to another end of the input capacitor C2 and a ground end. A gate of the power transistor Q1 and a gate of the power transistor Q2 receive the control signal from the control circuit 40. The gate of the power transistor Q1 and the power transistor Q2 are turned on or off under drive of the control signal that is output by the control circuit 40. It may be understood that the control signal that is output by the control circuit 40 includes an open-loop control signal G1 and a closed-loop control signal G2. The open-loop control signal G1 is directly generated by the control circuit 40, and is used to perform open-loop control on the voltage conversion circuit 10. The closed-loop control signal G2 is generated by the control circuit 40 based on a signal fed back by the voltage conversion circuit 10, and is used to perform closed-loop control on the voltage conversion circuit 10.

The primary-side winding 12 of the transformer Tr is configured to receive the output voltage V10 of the switch circuit 11, and generate a primary-side winding voltage V11 on the primary-side winding 12. The secondary-side winding 13 of the transformer Tr is coupled to the primary-side winding 12 of the transformer Tr, so that a secondary-side winding voltage V12 is generated on the secondary-side winding 13. The primary-side winding voltage V11 and the secondary-side winding voltage V12 each may be a voltage range.

For example, a dotted terminal of the primary-side winding 12 is connected to a bridge arm midpoint between the power transistor Q1 and the power transistor Q2, and a non-dotted terminal of the primary-side winding 12 is connected to a node between the capacitor C1 and the capacitor C2.

For example, the secondary-side winding 13 includes a first secondary-side winding Ls1 and a second secondary-side winding Ls2.

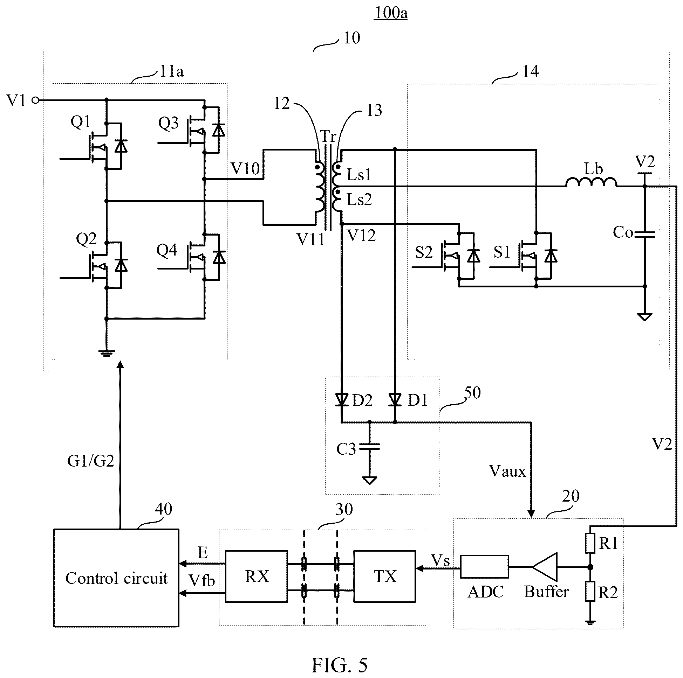

In some other embodiments, the switch circuit 11 may be a full-bridge circuit. FIG. 5 is another diagram of a power supply module according to an embodiment of this application.

A switch circuit 11a in the power supply module 100a shown in FIG. 5 has a full-bridge topology. For example, a switch circuit 11a includes a power transistor Q1, a power transistor Q2, a power transistor Q3, and a power transistor Q4.

For example, a drain of the power transistor Q1 is connected to a drain of the power transistor Q3, and receives an input voltage V1. A source of the power transistor Q1 is connected to a drain of the power transistor Q2, and a source of the power transistor Q3 is connected to a drain of the power transistor Q4. A source of the power transistor Q2 and a source of the power transistor Q4 are connected to a ground end.

It may be understood that a difference between the power supply module 100a shown in FIG. 5 and the power supply module 100 shown in FIG. 4 only lies in a different topology structure of the switch circuit 11a, and other same parts are not described herein again.

Still refer to FIG. 4. The rectifier circuit 14 is configured to receive the secondary-side winding voltage V12 generated on the secondary-side winding 13, and convert the secondary-side winding voltage V12 into an output voltage V2. The output voltage V2 may be a voltage range.

It may be understood that a specific structure of the rectifier circuit 14 is not limited in this embodiment. For example, the rectifier circuit 14 may use a full-bridge rectification topology, a full-wave rectification topology, or the like.

As shown in FIG. 4, the rectifier circuit 14 uses a full-wave rectification topology. For example, the rectifier circuit 14 includes a rectifier tube S1, a rectifier tube S2, an inductor Lb, and an output capacitor Co. One end of the rectifier tube S1 is connected to a dotted terminal of the first secondary-side winding Ls1, and one end of the rectifier tube S2 is connected to a non-dotted terminal of the second secondary-side winding Ls2. A non-dotted terminal of the first secondary-side winding Ls1 is connected to a dotted terminal of the second secondary-side winding Ls2, and a tap is formed between the non-dotted terminal and the dotted terminal. One end of the inductor Lb is connected to the tap between the first secondary-side winding Ls1 and the second secondary-side winding Ls2. Another end of the inductor Lb is connected to one end of the output capacitor Co. Another end of the rectifier tube S1, another end of the rectifier tube S2, and another end of the output capacitor Co are all connected to the ground.

The auxiliary power supply circuit 50 is configured to output an auxiliary voltage Vaux to the secondary-side feedback circuit 20 to supply power. In this embodiment, one end of the auxiliary power supply circuit 50 is connected to the secondary-side winding 13 to obtain power. Another end of the auxiliary power supply circuit 50 is connected to the secondary-side feedback circuit 20 to supply power.

For example, the auxiliary power supply circuit 50 includes a diode D1, a diode D2, and a voltage regulator capacitor C3. An anode of the diode D1 is connected to a node between the first secondary-side winding Ls1 and the rectifier tube S1, and an anode of the diode D2 is connected to a node between the second secondary-side winding Ls2 and the rectifier tube S2. One end of the voltage regulator capacitor C3 is connected to the ground. A cathode of the diode D1, a cathode of the diode D2, and another end of the voltage regulator capacitor C3 are connected, and are connected to the secondary-side feedback circuit 20 to supply power.

In some other embodiments, one end of the auxiliary power supply circuit 50 may be connected to the output end of the voltage conversion circuit 10, for example, connected to a node between the inductor Lb and the output capacitor Co to obtain power. Another end of the auxiliary power supply circuit 50 is connected to the secondary-side feedback circuit 20 to supply power.

In some other embodiments, the transformer Tr may include an auxiliary winding, and the auxiliary winding is coupled to the secondary-side winding 13 to generate an auxiliary winding voltage on the auxiliary winding. One end of the auxiliary power supply circuit 50 is connected to the auxiliary winding to obtain the auxiliary winding voltage. Another end of the auxiliary power supply circuit 50 is connected to the secondary-side feedback circuit 20 to supply power.

The secondary-side feedback circuit 20 is configured to obtain the output voltage V2 after receiving the auxiliary voltage Vaux. The secondary-side feedback circuit 20 is configured to obtain the output voltage V2 and output a sampling voltage Vs based on the output voltage V2.

For example, an input end of the secondary-side feedback circuit 20 is connected to the auxiliary power supply circuit 50 to receive the auxiliary voltage Vaux. Another input end of the secondary-side feedback circuit is connected to the output end of the voltage conversion circuit 10 to obtain the output voltage V2. An output end of the secondary-side feedback circuit 20 is connected to the isolation circuit 30 to output the sampling voltage Vs.

In some embodiments, the secondary-side feedback circuit 20 includes a resistor R1, a resistor R2, a voltage buffer (Buffer), and an analog-to-digital converter ADC. One end of the resistor R1 is connected to the output end of the voltage conversion circuit 10 to obtain the output voltage V2, one end of the resistor R2 is connected to another end of the resistor R1, and another end of the resistor R2 is connected to the ground. One end of the voltage buffer (Buffer) is connected to a connection node between the resistor R1 and the resistor R2, and another end of the voltage buffer (Buffer) is connected to one end of the analog-to-digital converter ADC. The resistor R1 and the resistor R2 are configured to perform voltage division on the output voltage V2, to reduce a voltage that is output by the secondary-side feedback circuit 20, so as to meet a requirement of the isolation circuit 30 on an input voltage. The voltage buffer (Buffer) is configured to improve a drive capability of a voltage obtained through voltage division. The digital-to-analog converter ADC is configured to convert an analog signal that is output by the voltage buffer (Buffer) into a digital signal and output the digital signal to the isolation circuit 30.

It may be understood that the secondary-side feedback circuit 20 samples the output voltage V2, and converts the output voltage V2 into the sampling voltage Vs that can be received by the isolation circuit 30. For example, the secondary-side feedback circuit 20 reduces a voltage value of the output voltage V2 to a range of the isolation circuit 30.

The isolation circuit 30 is configured to: output a feedback signal E in response to the sampling voltage Vs, and output a feedback voltage Vfb based on the sampling voltage Vs. The isolation circuit 30 is further configured to implement electrical isolation in a signal transfer process between the secondary-side feedback circuit 20 and the control circuit 40.

The feedback voltage Vfb is obtained based on the sampling voltage Vs, and the feedback voltage Vtb is also a voltage value in a form of a digital signal.

The feedback signal E represents whether the isolation circuit 30 receives the sampling voltage Vs. It may be understood that, if the isolation circuit 30 receives the sampled voltage Vs, it indicates that a feedback loop of the power supply module 100 works normally. In this case, the isolation circuit 30 outputs the feedback signal E to the control circuit 40. If the isolation circuit 30 does not receive the sampling voltage Vs, it indicates that a feedback loop of the power supply module 100 cannot work normally. For example, the feedback loop is not established or a fault occurs after the feedback loop is established. In this case, the isolation circuit 30 does not output the feedback signal E to the control circuit 40.

For example, a transmitting part TX of the isolation circuit 30 is connected to the analog-to-digital converter ADC to receive the sampling voltage Vs. The transmitting part TX transmits the sampling voltage Vs to a receiving part RX, and the receiving part RX is configured to output the feedback voltage Vfb and the feedback signal E.

It may be understood that, electrical isolation of a signal is implemented by disposing the isolation circuit 30, so that signal interference between a primary side and a secondary side of the power supply module 100 can be reduced.

In some embodiments, the isolation circuit 30 uses a digital isolation technology. Signals obtained and output by the isolation circuit 30 are both digital signals. That is, the sampling voltage Vs, the feedback voltage Vfb, and the feedback signal E are all digital signals. In a possible implementation, the isolation circuit 30 includes a digital isolation chip. The digital isolation chip can receive the sampling voltage Vs in a digital form, and output the feedback voltage Vtb and the feedback signal E in a digital form.

The control circuit 40 is configured to receive the feedback voltage Vfb and the feedback signal E. The control circuit 40 outputs the open-loop control signal G1 to the voltage conversion circuit 10 in response to not receiving the feedback signal E, stops outputting the open-loop control signal G1 in response to open-loop pule generation information meeting a preset condition, and outputs the closed-loop control signal G2 to the voltage conversion circuit 10 in response to receiving the feedback signal E.

The open-loop control signal G1 and the closed-loop control signal G2 are used to drive a switching transistor in the voltage conversion circuit 10 to be turned on or turned off.

It may be understood that the open-loop control signal G1 that is output by the control circuit 40 includes an implementation such as a high-level signal or a low-level signal. For example, in embodiments of this application, the power transistor is turned on based on the open-loop control signal G1. In some other embodiments, the power transistor is turned off based on the open-loop control signal G1. A turn-on or turn-off manner based on the closed-loop control signal G2 is similar to that based on the open-loop control signal G1, and details are not described herein again.

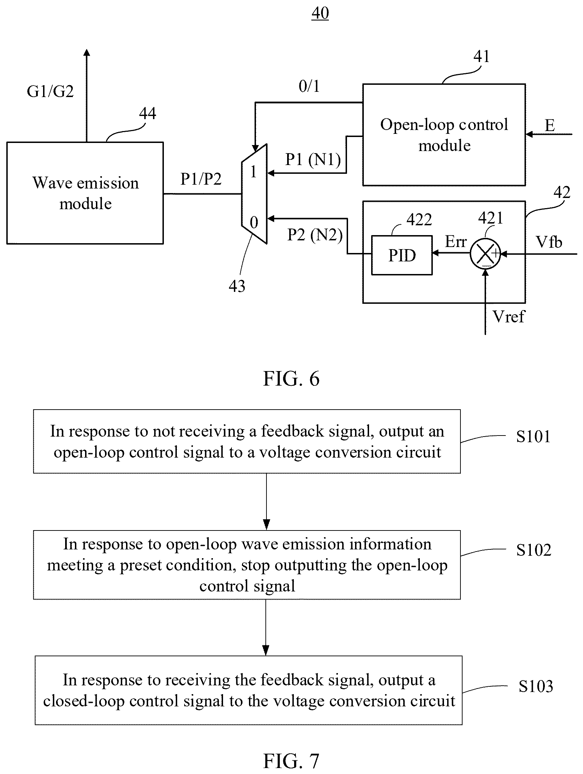

FIG. 6 is a diagram of a structure of the control circuit 40 in FIG. 4. It may be understood that the control circuit 40 shown in FIG. 4 is also applicable to the power supply module 100a shown in FIG. 5.

In this embodiment, the control circuit 40 includes an open-loop control module 41, a closed-loop control module 42, a switching unit 43, and a pule generation module 44.

The open-loop control module 41 is configured to output a first control signal P1 to the switching unit 43. It may be understood that the first control signal P1 includes an open-loop pule generation duty cycle N1.

The open-loop control module 41 is further configured to output a first gating signal to the switching unit 43 in response to not receiving the feedback signal E, output a second gating signal in response to receiving the feedback signal E, and output the second gating signal to the switching unit 43 in response to the open-loop pule generation information meeting the preset condition.

For example, an input end of the open-loop control module 41 is connected to the receiving part RX of the isolation circuit 30 to receive the feedback signal E. An output end of the open-loop control module 41 is connected to the switching unit 43 to output the first control signal P1. Another output end of the open-loop control module 41 is connected to the switching unit 43 to output the first gating signal and the second gating signal. It may be understood that a specific circuit structure of the open-loop control module 41 is not limited in embodiments of this application.

For example, the first gating signal is a digital signal 1, and the second gating signal is a digital signal 0.

The closed-loop control module 42 is configured to receive a reference voltage Vref and the feedback voltage Vfb, and output a second control signal P2 to the switching unit 43. It may be understood that, the second control signal P2 usually includes a closed-loop pule generation duty cycle N2.

In some embodiments, the closed-loop control module 42 includes an error unit 421 and a proportional-integral-derivative (Proportion Integration Differentiation, PID) control unit 422. The error unit 421 is configured to receive the feedback voltage Vfb and the reference voltage Vref, and obtain an error signal Err based on the feedback voltage Vfb and the reference voltage Vref. The PID control unit 422 is configured to receive the error signal Err, and generate the second control signal P2 based on the error signal Err.

For example, an input end of the error unit 421 is connected to the isolation circuit 30 to receive the feedback voltage Vfb, and another input end of the error unit 421 receives the reference voltage Vref.

For example, the error unit 421 includes a subtractor, and the error unit 421 is configured to calculate a difference between the feedback voltage Vfb and the reference voltage Vref to obtain the error signal Err.

For example, an input end of the PID control unit 422 is connected to the error unit 421 to receive the error signal Err. An output end of the PID control unit 422 is connected to the switching unit 43 to output the second control signal P2.

It may be understood that, in this embodiment, the error unit 421 and the PID control unit 422 are disposed to generate the second control signal P2 including closed-loop pule generation duty cycle information, so that the control circuit 40 can output the closed-loop control signal G2 based on information about the output voltage V2, to implement closed-loop control of the power supply module 100.

It may be understood that, because the feedback voltage Vfb that is output by the isolation circuit 30 is a digital signal, the reference voltage Vref is also a digital signal.

In this embodiment, a manner of providing the reference voltage Vref is not limited herein. For example, the reference voltage Vref is an internal reference voltage provided by the closed-loop control module 42.

The switching unit 43 is configured to receive the first control signal P1 and the second control signal P2. The switching unit 43 is further configured to output the first control signal P1 to the pule generation module 44 in response to the first gating signal, and output the second control signal P2 to the pule generation module 44 in response to the second gating signal.

For example, a first input end of the switching unit 43 is connected to the open-loop control module 41 to receive the first gating signal and the second gating signal. A second input end of the switching unit 43 is connected to the open-loop control module 41 to receive the first control signal P1. A third input end of the switching unit 43 is connected to the closed-loop control module 42 to receive the second control signal P2.

The pule generation module 44 is configured to output the open-loop control signal G1 in response to the first control signal P1 that is output by the switching unit 43, and output the closed-loop control signal G2 in response to the second control signal P2 that is output by the switching unit 43.

For example, the pule generation module 44 is connected to an input end of the switching unit 43 to receive the first control signal P1 or the second control signal P2. An output end of the pule generation module 44 is connected to a power transistor (for example, Q1 or Q2) in the voltage conversion circuit 10 to output the open-loop control signal G1 or the closed-loop control signal G2.

It should be understood that the pule generation module 44 can generate the corresponding open-loop control signal G1 based on the open-loop pule generation duty cycle N1 in the first control signal P1, and generate the corresponding closed-loop control signal G2 based on the closed-loop pule generation duty cycle N2 in the second control signal P2.

In a possible implementation, the pule generation module 44 includes a pulse width modulation (Pulse Width Modulation, PWM) signal generator. The pule generation module 44 generates the open-loop control signal G1 or the closed-loop control signal G2 by using the PWM signal generator.

It may be understood that, in this embodiment, the switching unit 43 is disposed to receive both the first control signal P1 of the open-loop control module 41 and the second control signal P2 of the closed-loop control module 42; and output the first control signal P1 when the feedback signal E is not received, so that the pule generation module 44 outputs the open-loop control signal G1; or output the second control signal P2 when the feedback signal E is received, so that the pule generation module 44 outputs the closed-loop control signal G2. In this way, the control circuit 40 can continuously output the open-loop control signal G1 when information about the output voltage V2 is not received, to maintain operation of the power supply module 100, or output the closed-loop control signal G2 when information about the output voltage V2 is received, to perform closed-loop control on the power supply module 100, thereby avoiding output overvoltage of the power supply module 100.

In some embodiments, the control circuit 50 is configured to: in response to not receiving the feedback signal E, output the open-loop control signal G1 to the voltage conversion circuit 10; and in response to the open-loop pule generation information meeting the preset condition, stop outputting the open-loop control signal G1. The open-loop pule generation information includes open-loop pule generation duration tp. That the open-loop pule generation information meets the preset condition includes that the open-loop pule generation duration tp exceeds preset feedback duration td. The preset feedback duration td is a sum of first duration △t1, a maximum value of second duration △t2, and third duration △t3.

The preset feedback duration td is stored in the control circuit 50. For example, the preset feedback duration td is stored in the open-loop control module 41.

The first duration △t1 is interval duration between a first moment t1 and a second moment t2. The first moment t1 is a time point at which the power supply module 100 is started. The second moment t2 is a time point at which the secondary-side feedback circuit 20 receives the auxiliary voltage Vaux. It may be understood that, before the power supply module 100 is powered on (that is, started), the secondary side of the voltage conversion circuit 10 is in an undervoltage state. Both the output voltage V2 and the auxiliary voltage Vaux are 0. When the power supply module 100 is powered on, the control circuit 40 on the primary side outputs the open-loop control signal G1 to enable the voltage conversion circuit 10 to work, and both the output voltage V2 and the auxiliary voltage Vaux start to rise. Therefore, there is an interval of the first duration △t1 between the time point at which the voltage conversion circuit 10 is started and the time point at which the secondary-side feedback circuit 20 receives the auxiliary voltage Vaux.

It is assumed that an LC time constant formed by the inductor Lb and the output capacitor Co is a first time constant, and a duration constant formed by a parasitic resistor of a diode (D1 or D2) and the voltage regulator capacitor C3 in the auxiliary power supply circuit 50 is a second time constant. Because a capacitance value of the output capacitor Co is usually relatively large, and a resistance value of the parasitic resistor and a capacitance value of the voltage regulator capacitor C3 are usually relatively small, the first time constant is far greater than the second time constant. Therefore, the auxiliary voltage Vaux rises faster than the output voltage V2. In this way, the secondary-side feedback circuit 20 can receive the auxiliary voltage Vaux long before the output voltage V2 encounters overvoltage, so as to enter a normal working state.

The second duration △t2 is interval duration between the second moment t2 and a third moment t3. The third moment t3 is a time interval at which the secondary-side feedback circuit 20 starts to normally work. It may be understood that after the secondary-side feedback circuit 20 is powered on, that is, after the auxiliary voltage Vaux is obtained, some components in the secondary-side feedback circuit 20 further need a period of time to complete initialization work. The secondary-side feedback circuit 20 can normally work only after the initialization work is completed. For example, a clock signal of the analog-to-digital converter ADC needs to be stably output within the period of initialization time.

It may be understood that due to impact of factors such as a temperature factor and a manufacturing process of a capacitor, there is usually a difference between a nominal capacity and an actual capacity of the capacitor. Therefore, a time interval from a time point at which the secondary-side feedback circuit 20 receives the auxiliary voltage Vaux to a time point at which the secondary-side feedback circuit 20 normally works fluctuates. In this embodiment, a maximum time interval from the time point at which the secondary-side feedback circuit 20 receives the auxiliary voltage Vaux to the time point at which the secondary-side feedback circuit 20 normally works is defined as the maximum value △t2max of the second duration △t2.

The third duration △t3 is interval duration between the third moment t3 and a fourth moment t4. The fourth moment t4 is a time point at which the control circuit 40 receives the feedback signal E. It may be understood that the secondary-side feedback circuit 20 may start to output the sampling voltage Vs to the isolation circuit 30 since normal working. The isolation circuit 30 needs to transmit the sampling voltage Vs from the transmitting part TX on the secondary side to the receiving part RX on the primary side, and output the converted feedback signal E and the feedback voltage Vfb to the control circuit 40. When the control circuit 40 receives the feedback signal E, it indicates that communication is established between the secondary side and the primary side. That is, the third duration Δt3 is duration required for completing handshake communication between the secondary side and the primary side for the first time.

It may be understood that, when the power supply module 100 is started, the control circuit 40 starts to output the open-loop control signal G1 in response to not receiving the feedback signal E. When the control circuit 40 receives the feedback signal E, it indicates that the control circuit 40 can receive the information about the output voltage V2. In this case, the control circuit 40 starts to switch from outputting the open-loop control signal G1 to outputting the closed-loop control signal G2, to perform normal closed-loop control of the output voltage V2. Therefore, in a time period from the time point at which the power supply module 100 is started to the time point at which the control circuit 40 receives the feedback signal E, the control circuit 40 continuously outputs the open-loop pule generation signal G1. Therefore, the open-loop pule generation duration tp is a time period in which the control circuit 40 outputs the open-loop control signal G1.

It should be understood that the first duration △t1 is the time interval from the time point at which the voltage conversion circuit 10 is started to the time point at which the secondary-side feedback circuit 20 receives the auxiliary voltage Vaux, the second duration △t2 is the time interval from the time point at which the secondary-side feedback circuit 20 receives the auxiliary voltage Vaux to the time point at which the secondary-side feedback circuit 20 starts to normally work, and the third duration △t3 is the time interval from the time point at which the secondary-side feedback circuit 20 normally works to the time point at which the control circuit 40 receives the feedback signal E. Therefore, under a same condition (for example, a same used capacitor and a same ambient temperature), the open-loop pule generation duration tp should be equal to a sum of the first duration △t1, the second duration △t2, and the third duration △t3. However, because the second duration △t2 fluctuates, the open-loop pule generation duration tp may be greater than the sum of the first duration △t1, the second duration △t2, and the third duration △t3, that is, tp=△t1+△t2+△t3. However, the open-loop pule generation duration tp should be less than the sum of the first duration △t1, the maximum value of the second duration △t2, and the third duration △t3, that is, tp≤△t1+△t2max+△t3.

In these embodiments, the preset feedback duration td=△t1+△t2max+△t3. It may be understood that, the preset feedback duration is a maximum time interval from a time point at which the power supply module 100 is started to a time point at which the control circuit 40 receives the feedback signal E in a normal case. If the open-loop pule generation duration tp is greater than the preset feedback duration td, it indicates that the open-loop pule generation duration tp expires, and the feedback loop of the power supply module 100 may be faulty. As a result, communication cannot be established between the primary side and the secondary side. The output voltage V2 of the power supply module 100 needs to be reduced in a timely manner to avoid output overvoltage.

In these embodiments, in response to the preset feedback duration td being greater than the preset feedback duration td, the control circuit 40 stops outputting the open-loop control signal G1. For example, in response to the preset feedback duration td being greater than the preset feedback duration td, the open-loop control module 41 in the control circuit 40 is restarted after being turned off for a period of time. It may be understood that, output of the first control signal P1 can be stopped by turning off the open-loop control module 41, and then the pule generation module 44 cannot output the open-loop control signal G1 in response to the first control signal P1. Because the voltage conversion circuit 10 cannot receive the control signal, the output voltage V2 of the voltage conversion circuit 10 starts to decrease, to avoid a possible overvoltage situation.

It is clear that, in these embodiments, the open-loop pule generation duration tp is compared with the preset feedback duration td, and when the open-loop pule generation duration tp exceeds the preset feedback duration td, output of the open-loop control signal G1 is stopped, so that the output voltage V2 of the voltage conversion circuit 10 is reduced, to avoid output overvoltage of the power supply module 100.

In some embodiments, the control circuit 50 is configured to: in response to not receiving the feedback signal E, output the open-loop control signal G1 to the voltage conversion circuit 10; and in response to the open-loop pule generation information meeting the preset condition, stop outputting the open-loop control signal G1. The open-loop pule generation information is the open-loop pule generation duty cycle N1. That the open-loop pule generation information meets the preset condition includes that the open-loop pule generation duty cycle N1 exceeds a preset duty cycle Nd.

The preset duty cycle Nd is stored in the control circuit 50. For example, the preset duty cycle Nd is stored in the open-loop control module 41.

In these embodiments, there is a determined correspondence between the open-loop pule generation duty cycle N1 and the open-loop pule generation duration tp. That is, the determined open-loop pule generation duration tp may be obtained based on the open-loop pule generation duty cycle N1. Further, if the open-loop pule generation duration tp exceeds the foregoing preset feedback duration td, the open-loop pule generation duty cycle N1 exceeds the preset duty cycle Nd. It may be understood that a definition of the preset feedback duration td is consistent with that in the foregoing embodiment, and details are not described herein again.

For example, the open-loop control module 41 generates the corresponding open-loop pule generation duty cycle N1 (the first control signal P1) based on the recorded open-loop pule generation duration tp, for output to the pule generation module 44. As the open-loop pule generation duration tp changes, the open-loop pule generation duty cycle N1 also changes. When the open-loop pule generation duty cycle N1 exceeds the preset duty cycle Nd pre-stored in the open-loop control module 41, the open-loop control module 41 stops outputting the first control signal P1, and then the control circuit 40 stops outputting the open-loop control signal G1.

In some other embodiments, there is a determined correspondence between the open-loop pule generation duty cycle N1 and the output voltage V2. That is, the determined output voltage V2 may be obtained based on the open-loop pule generation duty cycle N1. Further, if the open-loop pule generation duty cycle N1 exceeds the preset duty cycle Nd, it indicates that the output voltage V2 encounters overvoltage, and the feedback loop of the power supply module 100 is faulty.

It is clear that, in these embodiments, the open-loop pule generation duty cycle N1 is compared with the preset duty cycle Nd, and when the open-loop pule generation duty cycle N1 exceeds the preset duty cycle Nd, output of the open-loop control signal G1 is stopped, so that the output voltage V2 of the voltage conversion circuit 10 is reduced, to avoid output overvoltage of the power supply module 100.

An embodiment of this application provides a control method for a power supply module. The method is applicable to the power supply module 100/100a in the foregoing embodiments. As shown in FIG. 7, the control method for a power supply module includes the following steps.

Step S101: In response to not receiving a feedback signal E, output an open-loop control signal Gl to a voltage conversion circuit 10.

It may be understood that this step is performed by a control circuit 40. As shown in FIG. 4, the control circuit 40 can receive the feedback signal E by using a feedback loop including a secondary-side feedback circuit 20 and an isolation circuit 30. If the control circuit 40 does not receive the feedback signal E, it indicates that the feedback loop has not been established, and the control circuit 40 has not received information about an output voltage V2 from a secondary side. Therefore, the control circuit 40 generates and outputs the open-loop control signal G1 to the voltage conversion circuit 10. For a specific working principle thereof, refer to FIG. 4 to FIG. 6 and related descriptions thereof, and details are not described herein again.

Step S102: In response to open-loop pule generation information meeting a preset condition, stop outputting the open-loop control signal G1.

It may be understood that this step is performed by the control circuit 40. In this step, the open-loop pule generation information may be open-loop pule generation duration tp or an open-loop pule generation duty cycle N1. When the open-loop pule generation information is the open-loop pule generation duration tp, the preset condition is that the open-loop pule generation duration tp exceeds preset feedback duration td. When the open-loop pule generation information is the open-loop pule generation duty cycle N1, the preset condition is that the open-loop pule generation duty cycle N1 exceeds a preset duty cycle Nd. For a specific working principle thereof, refer to FIG. 4 to FIG. 6 and related descriptions thereof, and details are not described herein again.

Step S103: In response to receiving the feedback signal E, output a closed-loop control signal G2 to the voltage conversion circuit 10.

It may be understood that this step is performed by the control circuit 40. When the control circuit 40 receives the feedback signal E, it indicates that the feedback loop has been established, and the control circuit 40 has received the information about the output voltage V2 from the secondary side, for example, a feedback voltage Vfb. The control circuit 40 can generate and output the closed-loop control signal G2 to the voltage conversion circuit 10 based on the feedback voltage Vfb. For a specific working principle thereof, refer to FIG. 4 to FIG. 6 and related descriptions thereof, and details are not described herein again.

It may be understood that, in embodiments of this application, whether an open-loop pule generation time period is excessively long is determined based on the open-loop pule generation information, to determine whether a fault occurs in the feedback loop of the power supply module 100/100a. When the open-loop pule generation time period is excessively long, output of the open-loop control signal to the voltage conversion circuit 10 is stopped, to avoid output overvoltage of the power supply module 100/100a. In embodiments of this application, no additional component needs to be added, so that a size of the power supply module 100/100a can be reduced. Embodiments of this application are applicable to a hard switch topology structure, for example, a hard switch full-bridge topology and a hard switch half-bridge topology. There is no limitation on a circuit topology structure, and applicability is wider.

A person of ordinary skill in the art should understand that the foregoing implementations are merely intended to describe this application but are not intended to limit this application, and all appropriate modifications and changes made to the foregoing embodiments fall within the protection scope of this application provided that the modifications and changes are within the spirit and scope of the essence of this application.

## Claims

1. A control circuit for a power supply module, wherein the power supply module comprises a voltage conversion circuit, a secondary-side feedback circuit, and an isolation circuit, the voltage conversion circuit is configured to convert a direct current input voltage into a direct current output voltage, the secondary-side feedback circuit is configured to obtain the direct current output voltage and output a sampling voltage based on the direct current output voltage, the isolation circuit is configured to output a feedback signal in response to the sampling voltage, and the control circuit is configured to:
in response to not receiving the feedback signal, output an open-loop control signal to the voltage conversion circuit; and
in response to open-loop pule generation information meeting a preset condition, stop outputting the open-loop control signal, wherein
the open-loop pule generation information comprises open-loop pule generation duration or an open-loop pule generation duty cycle, the open-loop pule generation duration is a time period for the control circuit to output the open-loop control signal, and the open-loop pule generation duty cycle is a duty cycle of the open-loop control signal.

2. The control circuit according to claim 1, wherein that the open-loop pule generation information meets the preset condition comprises: the open-loop pule generation duration exceeds preset feedback duration.

3. The control circuit according to claim 2, wherein the power supply module comprises an auxiliary power supply circuit, the auxiliary power supply circuit is configured to output an auxiliary voltage to the secondary-side feedback circuit, and the secondary-side feedback circuit is configured to obtain the direct current output voltage after receiving the auxiliary voltage;
the preset feedback duration is a sum of first duration, a maximum value of second duration, and third duration;
the first duration is interval duration between a first moment and a second moment, the first moment is a time point at which the power supply module is started, and the second moment is a time point at which the secondary-side feedback circuit receives the auxiliary voltage;
the second duration is interval duration between the second moment and a third moment, and the third moment is a time point at which the secondary-side feedback circuit starts to normally work; and
the third duration is interval duration between the third moment and a fourth moment, and the fourth moment is a time point at which the control circuit receives the feedback signal.

4. The control circuit according to claim 2 or 3, wherein the control circuit comprises:
an open-loop control module, configured to output a first control signal, and output a first gating signal in response to not receiving the feedback signal;
a switching unit, configured to receive the first control signal, and output the first control signal in response to the first gating signal; and
a pule generation module, configured to output the open-loop control signal in response to the first control signal that is output by the switching unit.

5. The control circuit according to claim 4, wherein the isolation circuit is configured to output a feedback voltage based on the sampling voltage, wherein the feedback voltage represents the direct current output voltage;
the open-loop control module is configured to output the second gating signal in response to receiving the feedback signal, and output the second gating signal in response to the open-loop pule generation information meeting the preset condition;
the control circuit further comprises a closed-loop control module, and the closed-loop control module is configured to receive the feedback voltage and output a second control signal to the switching unit;
the switching unit is configured to receive the second control signal, and output the second control signal in response to the second gating signal; and
the pule generation module is configured to output a closed-loop control signal in response to the second control signal that is output by the switching unit.

6. The control circuit according to claim 5, wherein the closed-loop control module comprises:
an error unit, configured to receive the feedback voltage and a reference voltage, and obtain an error signal based on the feedback voltage and the reference voltage; and
a proportional-integral-derivative control unit, configured to receive the error signal, and generate the second control signal based on the error signal.

7. The control circuit according to claim 1, wherein that the open-loop pule generation information meets the preset condition comprises: the open-loop pule generation duty cycle exceeds a preset duty cycle.

8. A control method for a power supply module, wherein the power supply module comprises a voltage conversion circuit, a secondary-side feedback circuit, and an isolation circuit, the voltage conversion circuit is configured to convert a direct current input voltage into a direct current output voltage, the secondary-side feedback circuit is configured to obtain the direct current output voltage and output a sampling voltage based on the direct current output voltage, the isolation circuit is configured to output a feedback signal in response to the sampling voltage, and the method comprises:
in response to not receiving the feedback signal, outputting an open-loop control signal to the voltage conversion circuit; and
in response to open-loop pule generation information meeting a preset condition, stopping outputting the open-loop control signal, wherein
the open-loop pule generation information comprises open-loop pule generation duration or an open-loop pule generation duty cycle, the open-loop pule generation duration is a time period for the control circuit to output the open-loop control signal, and the open-loop pule generation duty cycle is a duty cycle of the open-loop control signal.

9. The control method according to claim 8, wherein that the open-loop pule generation information meets the preset condition comprises: the open-loop pule generation duration exceeds preset feedback duration.

10. The control method according to claim 9, wherein the power supply module comprises an auxiliary power supply circuit, the auxiliary power supply circuit is configured to output an auxiliary voltage to the secondary-side feedback circuit, and the secondary-side feedback circuit is configured to obtain the direct current output voltage after receiving the auxiliary voltage;
the preset feedback duration is a sum of first duration, a maximum value of second duration, and third duration;
the first duration is interval duration between a first moment and a second moment, the first moment is a time point at which the power supply module is started, and the second moment is a time point at which the secondary-side feedback circuit receives the auxiliary voltage;
the second duration is interval duration between the second moment and a third moment, and the third moment is a time point at which the secondary-side feedback circuit starts to normally work; and
the third duration is interval duration between the third moment and a fourth moment, and the fourth moment is a time point at which the control circuit receives the feedback signal.

11. The control method according to claim 8, wherein that the open-loop pule generation information meets the preset condition comprises: the open-loop pule generation duty cycle exceeds a preset duty cycle.

12. A power supply module, wherein the power supply module comprises:
a voltage conversion circuit, configured to convert a direct current input voltage into a direct current output voltage;
a secondary-side feedback circuit, configured to obtain the direct current output voltage and output a sampling voltage based on the direct current output voltage;
an isolation circuit, configured to output a feedback signal in response to the sampling voltage; and
a control circuit, configured to: in response to not receiving the feedback signal, output an open-loop control signal to the voltage conversion circuit; and in response to open-loop pule generation information meeting a preset condition, stop outputting the open-loop control signal, wherein
the open-loop pule generation information comprises open-loop pule generation duration or an open-loop pule generation duty cycle, the open-loop pule generation duration is a time period for the control circuit to output the open-loop control signal, and the open-loop pule generation duty cycle is a duty cycle of the open-loop control signal.

13. The power supply module according to claim 12, wherein that the open-loop pule generation information meets the preset condition comprises: the open-loop pule generation duration exceeds preset feedback duration; or
that the open-loop pule generation information meets the preset condition comprises: the open-loop pule generation duty cycle exceeds a preset duty cycle.

14. The power supply module according to claim 13, wherein the power supply module comprises an auxiliary power supply circuit, and the auxiliary power supply circuit is configured to output an auxiliary voltage to the secondary-side feedback circuit;
the secondary-side feedback circuit is configured to obtain the direct current output voltage after receiving the auxiliary voltage;
the preset feedback duration is a sum of first duration, a maximum value of second duration, and third duration; and
the first duration is interval duration between a first moment and a second moment, the first moment is a time point at which the power supply module is started, and the second moment is a time point at which the secondary-side feedback circuit receives the auxiliary voltage; the second duration is interval duration between the second moment and a third moment, and the third moment is a time point at which the secondary-side feedback circuit starts to normally work; and the third duration is interval duration between the third moment and a fourth moment, and the fourth moment is a time point at which the control circuit receives the feedback signal.

15. An electronic device, comprising the control circuit for a power supply module according to any one of claims 1 to 7, or comprising the power supply module according to any one of claims 12 to 14.
